# EUROPEAN PATENT SPECIFICATION

(11) **EP 3 027 405 B1**
(45) Date of publication and mention of the grant of the patent: **06.03.2024**
(21) Application number: 14739304.5
(22) Date of filing: 16.06.2014
(51) Int. Cl.: B32B 5/02, B32B 5/12, B32B 5/26, B32B 5/28, B32B 3/02, B32B 3/26, B29C 70/54

(54) **COMPOSITE LAMINATES HAVING HOLE PATTERNS PRODUCED BY CONTROLLED FIBER PLACEMENT**
VERBUNDSTOFFLAMINATE MIT DURCH KONTROLLIERTE FASERANORDNUNG HERGESTELLTEN LOCHMUSTERN
STRATIFIÉS COMPOSITES AYANT DES MOTIFS DE TROU PRODUITS PAR LA MISE EN PLACE CONTRÔLÉE DES FIBRES

(30) Priority: 29.07.2013 US 201313953392
(43) Date of publication of application: 08.06.2016
(73) Proprietor: The Boeing Company, Arlington, VA 22202 (US)
(72) Inventor: BUTLER, Geoffrey Allen, Chicago, IL 60606 (US); JOHNSON, Brice A., Chicago, IL 60606 (US); HUGHES, Jessica R., Chicago, IL 60606 (US); LAN, Justin Honshune, Chicago, IL 60606 (US)
(74) Representative: Morrall, Jonathan Ian McLachlan
(86) International application number: PCT/US2014/042522
(87) International publication number: WO 2015/017033

(56) References cited:
- US-A1- 2007 175 571
- US-A1- 2010 065 367
- US-A1- 2010 247 838

## Description

### BACKGROUND INFORMATION

### 1. Field:

The present disclosure generally relates to processes for fabricating composite laminates, and deals more particularly with a method of producing hole patterns in such laminates using controlled fiber placement, and to laminates having hole patterns produced thereby.

### 2. Background:

It is sometimes necessary to form a large number of holes or perforations in a composite structure. For example, acoustically treated structures may employ an acoustic panel having an outer composite laminate facesheet provided with thousands of perforations. The facesheet perforations cooperate with a cellular panel core to attenuate sound. Aircraft wing skins may also include composite laminate facesheets that are perforated in order to alter the airflow over the wing.

Current techniques for forming a large number of perforations or holes in a composite laminate can be time consuming, labor intensive and expensive. In one technique, tooling referred to as pin mats is used to create holes as individual fabric plies are pressed over and around the pins, and then cured into the laminate. The pins can be fragile and may be difficult to remove from the cured laminate. In another technique, the holes are formed by drilling individual holes in the laminate after it has been cured. Drilling thousands of individual holes with a drill bit is time consuming and may result in fiber breakout surrounding the holes due to bit wear. It is also possible to form holes in a composite laminate using a combination of masking and sand blasting, wherein a hole pattern is masked onto a cured laminate, and the holes are sandblasted into the laminate. The sandblasting process may also result in undesired fiber breakout. Fiber breakout around a hole may cause the hole diameter, hole finish and/or edges of the hole to be out-of-tolerance.

Accordingly, there is a need for a method of forming a relatively large number of holes or perforations in a composite laminate that is simple, efficient and controllable, and which eliminates the need for tooling and/or drilling processes. There is also a need for a method of forming hole patterns *in situ* in a laminate structure as the laminate is being fabricated. Further, there is a need for a perforated composite laminate having controlled hole patterns in which holes may be formed having various sizes, shapes and distribution patterns.

US 2010/065367 A1 states in accordance with its abstract, a method for making a composite laminate formed by curing a stacked structure comprising at least two layers of strips of fibrous material impregnated with resin, wherein the strips in adjacent layers have different directional orientations. An apparatus is provided for simultaneously separating a band of fibrous material impregnated with resin into strips and depositing the strips between adjacent pin rows of a pinmat to form the stacked structure.

US 2007/175571 A1 states in accordance with its abstract, a fabrication method of forming a thermoplastic composite laminate material with tailored and varying thickness in a continuous process. This process utilizes automated equipment or hand lay-up to collate parts or components into a multi-layer stack. Each stack contains all plies, including ply build-up areas, tacked in the proper location to maintain orientation and location. The consolidation tooling contains all necessary part features and is coordinated to the customized multiple ply stacks to form a single integrated thermoplastic composite laminate potentially having areas of differing thickness from these multiple ply stacks.

US 2010/247838 A1 states in accordance with its abstract, a beaded composite panel fabricated using composite plies. An opening is formed in each of the plies, and each ply is laid up on a bead feature and drawn down over the bead feature in the area of the opening so as to widen the opening into a gap allowing the ply to conform to the contour of the bead feature. Patches are fabricated and placed on the plies overlying the openings. The laid-up plies are compacted and cured.

### SUMMARY

The present disclosure provides a method of forming a pattern of holes in a composite laminate such as a skin used in acoustically treated panels for sound attenuation. Hole patterns may be formed in the laminate *in situ* as the laminate is being constructed. The need for specialized tooling such as pin mats is eliminated, and processes such as drilling and sandblasting which may produce fiber breakout are avoided. The method may be carried out using numerically controlled automatic fiber placement equipment, and is therefore efficient, highly repeatable and useful where higher production rates are desired. The method is also well-suited for use in fabricating composite laminates with controlled hole patterns using out-of-autoclave processes. In order to improve acoustic properties of the laminate, woven or non-woven materials such as, without limitation, metal or plastic wire meshes may be embedded into the laminate as the hole pattern is being formed.

According to claim 1 a method is provided of producing a composite laminate layup having pattern of holes therein. A layup is formed by laying up multiple plies of unidirectional pre-preg fiber, wherein each of the plies is laid up by laying down bandwidths of pre-preg fiber tows. The method also includes spacing apart the tows in each of the bandwidths to form gaps between the tows as the bandwidths are being laid down, and controlling locations of the tows as the bandwidths are being laid down. The gaps between the tows are controlled as the bandwidths are being laid down, and the fiber orientations of the plies are varied to form a pattern of holes in the layup. The method further comprises curing the layup and selecting a resin that is a thermally curable thermoset material having a viscosity which provides the resin with flow characteristics that prevent the resin from filling in the holes during thermal curing. Each of the plies may be laid up using a numerically controlled automated fiber placement machine. Spacing the tows may include varying the gaps between the tows. The method may further comprise varying a width of the tows. At least one of a woven or a non-woven material may be embedded within the plies of the layup. The method may also include selecting hole locations, hole sizes and hole shapes, and programming an automated fiber placement machine to automatically layup the plies and vary the fiber orientations of the plies to form the pattern of holes.

According to claim 7 a composite laminate is provided having a pattern of holes therein. The laminate comprises a plurality of spaced-apart fiber tows having varying fiber orientations arranged to form a pattern of holes in the laminate, and a resin matrix in which the fiber tows are embedded. The resin matrix is a thermally curable thermoset material and has a viscosity which provides the resin with flow characteristics that prevent the resin from filling in the holes during thermal curing in an autoclave. The fiber tows may be arranged in a plurality of plies having differing fiber orientations, and the fiber tows may have varying widths. The holes may each may have a polygonal shape.

Preferred embodiments are covered by the dependent claims.

### BRIEF DESCRIPTION OF THE DRAWINGS

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present disclosure when read in conjunction with the accompanying drawings, wherein:
Figure 1 is an illustration of a perspective view of a composite laminate having a hole pattern formed according to the disclosed method.
Figure 1A is an illustration of the area designated as "FIG. 1A" in Figure 1.
Figure 2 is an illustration of the area designated as FIG. 2 in Figure 1.
Figure 3 is an illustration of a sectional view taken along the line 3-3 in Figure 2.
Figure 3A is an illustration similar to Figure 3 but showing an alternate embodiment of the composite laminate having an embedded layer of porous material.
Figure 4 is an illustration of a plan view of the area designated as FIG. 4 in Figure 2.
Figure 5 is an illustration of a plan view showing a hole having a hexagonal shape.
Figure 6 is an illustration of a plan view of a hole having an octagonal shape.
Figure 7 is an illustration of a plan view of a hole having a round shape.
Figure 8 is an illustration of a plan view showing a ply having a 0° fiber orientation.
Figure 8A is an illustration of the area designated as FIG. 8A in Figure 8.
Figure 9 is illustration of a plan view of a ply having a 90° fiber orientation.
Figure 10 is an illustration of a plan view of a ply having a +45° fiber orientation.
Figure 11 is an illustration of a plan view of a ply having -45° fiber orientation.
Figure 12 is an illustration of a plan view of several overlaid courses of tows arranged to form a desired hole pattern according to the disclosed method.
Figure 12A is an illustration of the area designated as FIG. 12A in Figure 12.
Figure 13 is an illustration of a typical ply schedule for fabricating a composite laminate having a controlled hole pattern.
Figure 14 is an illustration of a combined block and diagrammatic view showing the components of an automated fiber placement system used to fabricate composite laminates having controlled hole patterns.
Figure 15 is an illustration of a block diagram showing individually controllable tow control modules forming part of a tape applicator head shown in Figure 14.
Figure 16 is an illustration of a perspective view of a portion of a wing showing an engine having an acoustically treated inlet employing the disclosed composite laminate.
Figure 17 is an illustration of a cross-sectional view of a portion of an acoustic panel taken along the line 17-17 in Figure 16.
Figure 18 is illustration of a flow diagram of a method of fabricating a composite laminate having a controlled hole pattern.
Figure 19 is an illustration of a flow diagram of a method of producing a composite laminate layup having a controlled hole pattern.
Figure 20 is an illustration of a flow diagram of aircraft production and service methodology.
Figure 21 is illustration of a block diagram of an aircraft.

### DETAILED DESCRIPTION

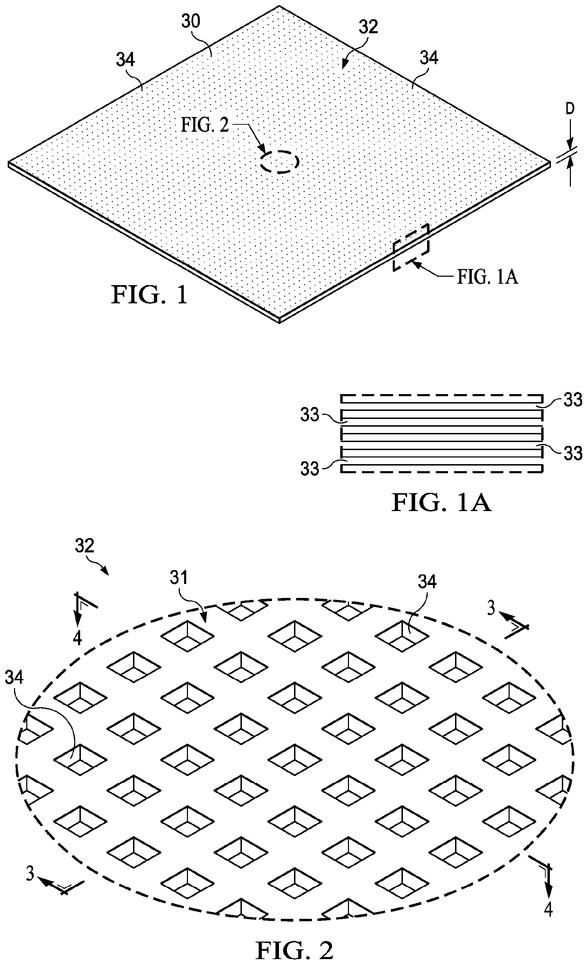

Referring to Figures 1-3, a composite laminate 30 includes a plurality of perforations or holes 34 therein which are arranged in a pattern 32, sometimes hereinafter referred to as a hole pattern 32. In the illustrated embodiment, the holes 34 pass completely through the depth "D" of the laminate 30, however it may be possible to form the holes 34 only partially through the thickness of "D". In the illustrated embodiment, the hole pattern 32 is a regular pattern in which the holes 34 arranged in a matrix, however in other embodiments the hole pattern 32 may be irregular, depending upon the application. The laminate 30 comprises a plurality of plies 33 (Figure 1A) of a fiber reinforced resin such as, without limitation, carbon fiber epoxy or other thermoset, or a fiber reinforced thermoplastic.

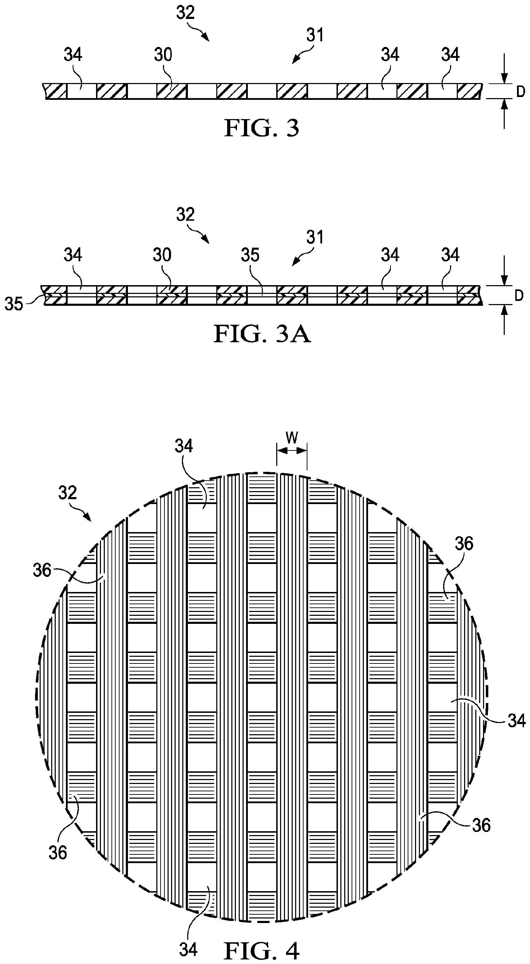

In some embodiments, as shown in Figure 3A, one or more layers 35 of material may be embedded between the plies 33 in order to tailor the laminate 30 to particular applications. The embedded layer 35 may be a woven or non-woven material, or a combination of woven and non-woven materials. For example, the embedded layer 35 may comprise a plastic or wire mesh that functions to improve the acoustical properties of the laminate 30.

Referring to Figures 1 and 4, each of the plies 33 may comprise unidirectional fiber reinforced resin. For example, and without limitation, the unidirectional fiber reinforced resin may comprise fiber tape or tows 36 (slit tape) pre-impregnated with a thermoset or thermoplastic resin. The tows 36 may be produced, for example and without limitation, by slitting pre-preg tape to a desired width "W". As will be discussed below in more detail, the tows 36 are spaced apart from each other and have fiber orientations that result in holes 34 which pass through the plies of 33.

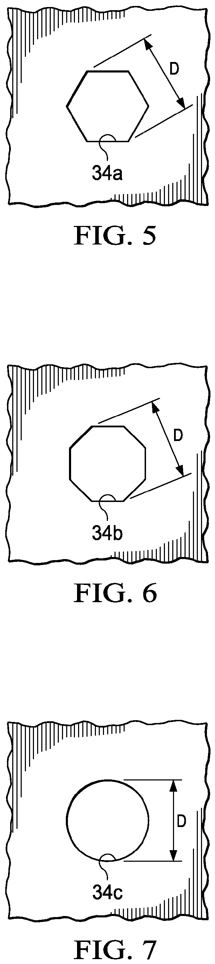

In the embodiment illustrated in Figures 1-4, the holes 34 have a substantially square shape, however other hole shapes are possible. For example, and without limitation, the plies of 33 may be laid up in a manner to produce holes 34a having a hexagonal shape shown in Figure 5, or an octagonal shape 34b shown in Figure 6. Depending upon the number of plies 33, it may be possible to produce holes 34c having a nearly circular shape as shown in Figure 7. In addition to controlling the shape of the holes 34, the size or maximum cross sectional dimension "D" may also be controlled using the disclosed method.

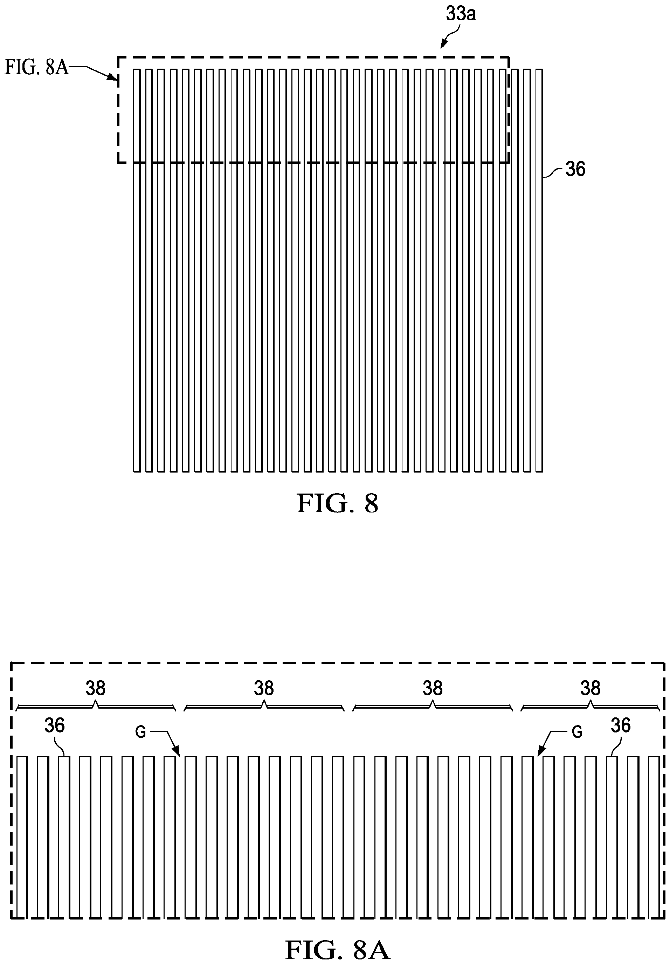

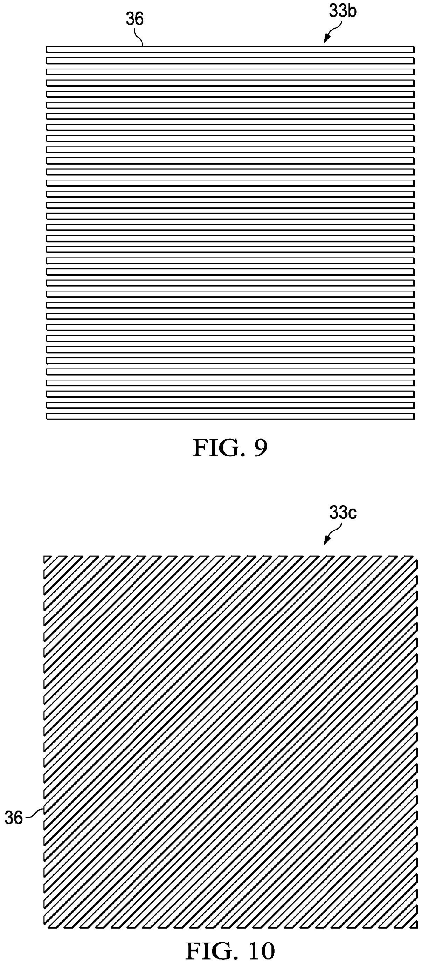

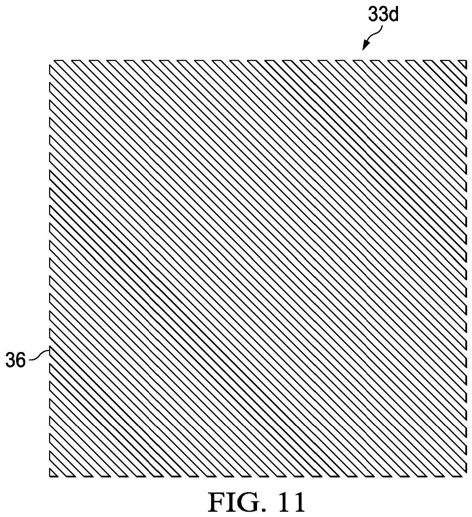

The laminate 30 is formed by laying up multiple plies 33 (see Figure 1) of unidirectional pre-preg fiber in which the plies have a varying fiber orientations. For example, referring to Figures 8, 9, 10 and 11, the laminate 30 may comprise plies 33a, 33b, 33c, 33d respectively having fiber orientations of 0°, 90°, +45° and -45° respectively. Other ply orientations are possible depending upon the application, and the desired size and shape of the holes 34. Referring to Figure 8A, each of the plies of 33 may be formed by laying down substantially parallel courses 38 of pre-preg tows 36, wherein the tows 36 in each course 38 are spaced apart from each other a desired distance to form gaps "G" between the tows 36. The size, shape and location of the holes 34 in the hole pattern 32 are determined by the fiber orientation of the plies 33, the location of the tows 36, the width "W" of the tows 36 and the size of the gaps "G".

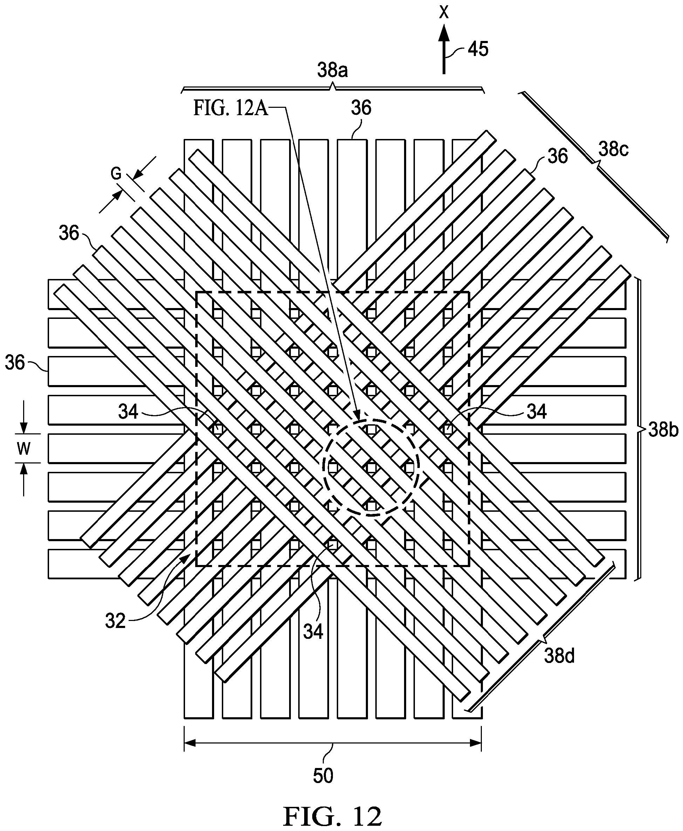

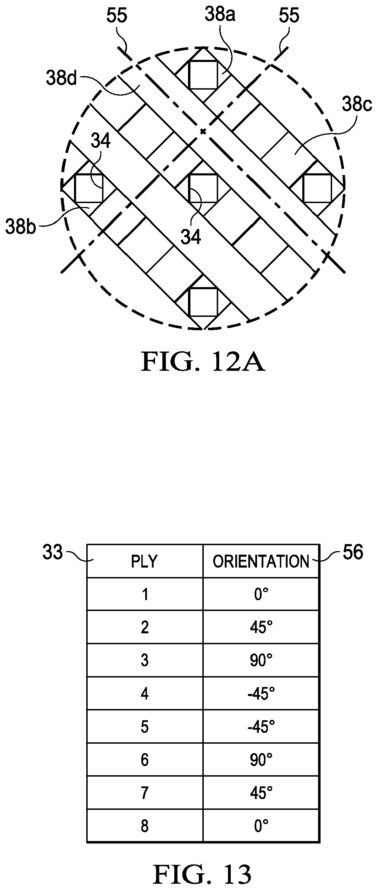

Attention is now directed to Figures 12 and 12A which illustrate four superimposed courses 38a, 38b, 38c, 38d which respectively form part of the plies 33a, 33b, 33c, 33d shown in Figures 8-11. The tows 36 in each course 38 have a desired width "W" and are spaced apart to form a desired gap "G" therebetween. The gaps "G" are formed by controlling the positions of the tows 36 relative to each other as the courses 38 are being laid down to form the plies 33. The tows 36 in each course 38 may be laid down in a single bandwidth 50 using, for example, automated fiber placement equipment, discussed below in more detail. The courses 48, and thus the plies 33 have fiber orientations arranged relative to a reference direction, which in the illustrated example, is the X direction which corresponds to a 0° orientation.

Figure 13 is a typical ply schedule for a composite laminate 30 (Figure 1) having a desired hole pattern 32. In this example, the ply schedule calls for a laminate comprising 8 plies 33, respectively having fiber orientations of 0°, +45°, 90°, -45°, -45°, 90°, +45°, and 0°. The tow courses 38a, 38b, 38c, 38d shown in Figure 12 respectively form portions of plies 1-4 shown in the ply schedule of the Figure 13. The gaps "G" are determined by the location of the centerlines 55 (Figure 12) of the tows 36. The gaps "G", the width "W" of the tows 36 and the fiber orientation of the plies of 33 determine the size, location and shape of the holes 34 in the hole pattern 32.

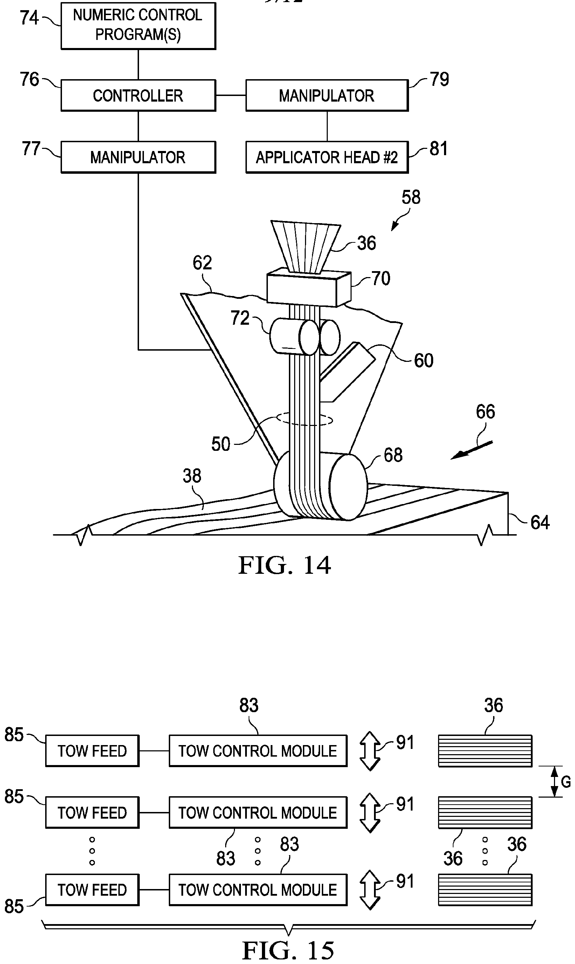

Each of the plies of 33 of the laminate 30 may be laid up using any of several known automated fiber placement (AFP) machines. For example, the components of one known AFP machine are broadly shown in Figure 14. A fiber applicator head 58 may be mounted on a manipulator 77 which is controlled by a controller 76 operated by one or more numeric control programs 74. The controller 76 may comprise a general purpose computer or a programmable logic controller (PLC). The controller 76 and the manipulator 77 move applicator head 58 over a substrate 64 in a desired direction 66 to lay down multiple courses 38 of tows 36 with a desired fiber orientation according to a ply schedule chosen for the application.

The gaps "G" between the tows 36 are not shown in Figure 14 for simplicity of illustration. The tows 36 may be fed through a collimator 70 which aligns and spaces the tows 36 apart. The aligned tows 36 are delivered through feed and guide rollers 72 and are cut to a desired course length by one or more cutters 60. The tows 36 are then applied to the substrate 64 and compacted by a roller 68. In some embodiments, a single applicator head 58 may be used to layup all of the plies 33 in the laminate 30. However, multiple applicator heads supplied with tows of differing widths "W" may be used to layup the laminate. For example, in Figure 14, a second applicator head 81 mounted on a second manipulator 79 is operated by the controller 76 in synchronization with applicator head 58 in order to speed up the layup process.

The applicator heads 58, 81 shown in Figure 14 may employ a known tow control arrangement of the type illustrated in Figure 15. A plurality of on-board tow feeds 85 deliver tows 36 from an onboard tow supply (not shown) to individual tow control modules 83. The tow control modules 83 are laterally movable 91 to adjust the gap "G" between adjacent tows 36 in each course 38.

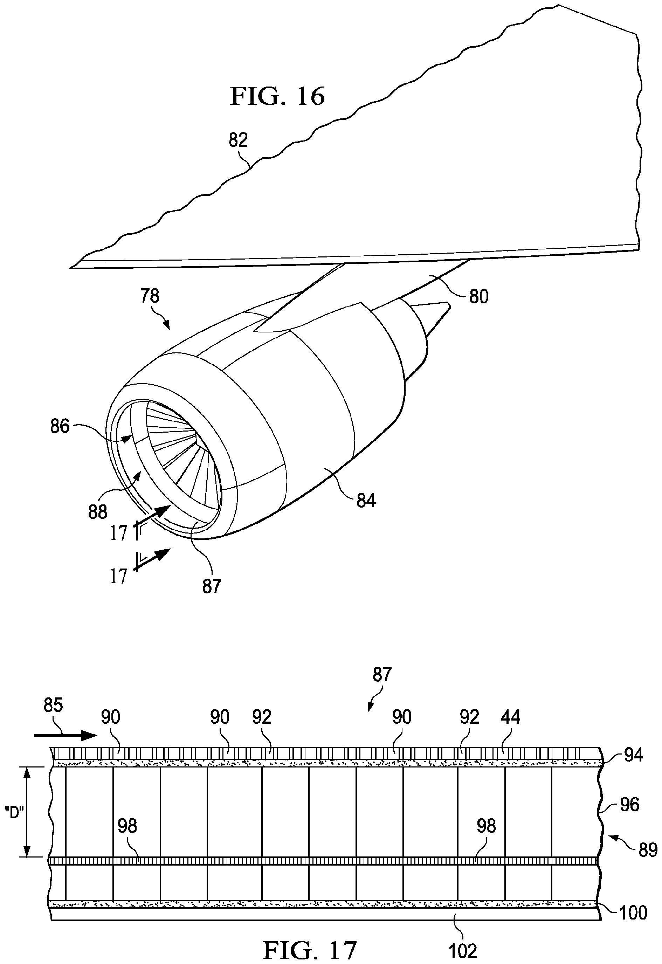

As previously discussed, the laminate 30 having a controlled hole pattern 32 may be used in a variety of acoustical treatment applications. For example, referring now to Figure 16, a high bypass engine 78 is mounted to an aircraft wing 82 by a pylon 80. The engine 20 includes a surrounding engine nacelle 84 having an air inlet 86. The air inlet 86 includes an acoustically treated area 88 in the form of an acoustic panel 87 for reducing noise caused by the spinning blades in the engine 78.

Attention is now directed to Figure 17 which is a cross sectional view illustrating additional details of the acoustic panel 87. The panel 87 broadly comprises a cellular honeycomb core 89 sandwiched between inner and outer facesheet 92, 102, respectively. The inner facesheet 92 includes a multiplicity of perforations therethrough 44 which allow soundwaves including noise to pass through the inner facesheet 92 into the core 89. The disclosed composite laminate 30 having a controlled hole pattern may be used as the inner facesheet 92. The inner facesheet 92 is attached to the face of the honeycomb core 89 by an adhesive bond line 94. Similarly, the outer facesheet 102 is attached to the other face of the honeycomb core 89 by an adhesive bond line 100.

In the illustrated embodiments, the inner and outer facesheets 92, 102 respectively each comprise a laminated composite such as a CFRP (carbon fiber reinforced plastic) or a fiber reinforced thermoplastic however, either of these facesheets may include other materials such as, without limitation, a ceramic or a metal such as aluminum. The honeycomb core 89 may comprise a metal such as aluminum, a polymer or other materials and is formed of a multiplicity of individual polygonal cells 96. In the illustrated example, the cells 46 are hexagonal, however other cell geometries are possible. The honeycomb core 89 is septumized by a plurality of individual septums 98 that are positioned within the cells 96 at a preselected depth "D". The septa 98 assist in dampening and attenuating soundwaves entering honeycomb core 89 through the perforations 90 in the inner facesheet 92.

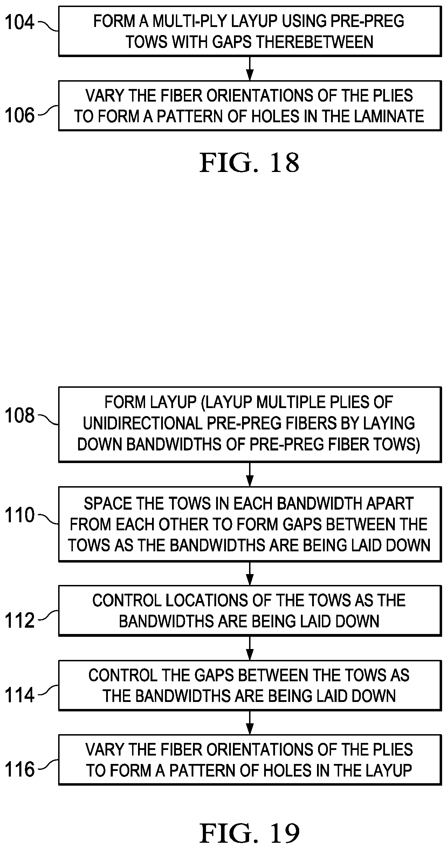

Figure 18 broadly illustrates the overall steps of a method of producing a composite laminate having a desired pattern 32 of holes 34 therein. At step 104, a multiply layup 30 is formed using pre-preg tows 36 which have gaps "G" therebetween. At 106, the fiber orientations of the plies 33 are varied in order to form a pattern 32 of holes 34 in the laminate 30.

Figure 19 broadly illustrates the overall steps of a method of producing a composite laminate layup having a pattern 32 of holes 34 therein. At step 108, the layup is formed by laying a multiple plies 33 of unidirectional pre-preg fibers. Laying up the plies 33 may be carried out by laying down bandwidths 50 of pre-preg fiber tows 36. At step 110, the tows 36 in each of the bandwidths 50 are spaced apart from each other to form a gaps "G" between the tows 36 as the bandwidths 50 are being laid down. At step 112, the locations of the tows 36 are controlled as the bandwidths 50 are being laid down. Similarly, at step 114, the gaps "G" between the tows 36 are controlled as the bandwidths 50 are being laid down. At step 116, the fiber orientations of the plies 33 are varied in order to form a pattern 32 of holes 34 in the layup. The completed laminate may be cured using an out-of-autoclave process in which vacuum pressure is employed to help control flow of the resin, and prevent the resin from filling in the holes 34 during curing. Alternatively, it may be possible to cure the laminate 30 in an autoclave, providing that a resin is used having a higher viscosity which provides the resin with flow characteristics that prevents the resin from filling in the holes 34 during curing.

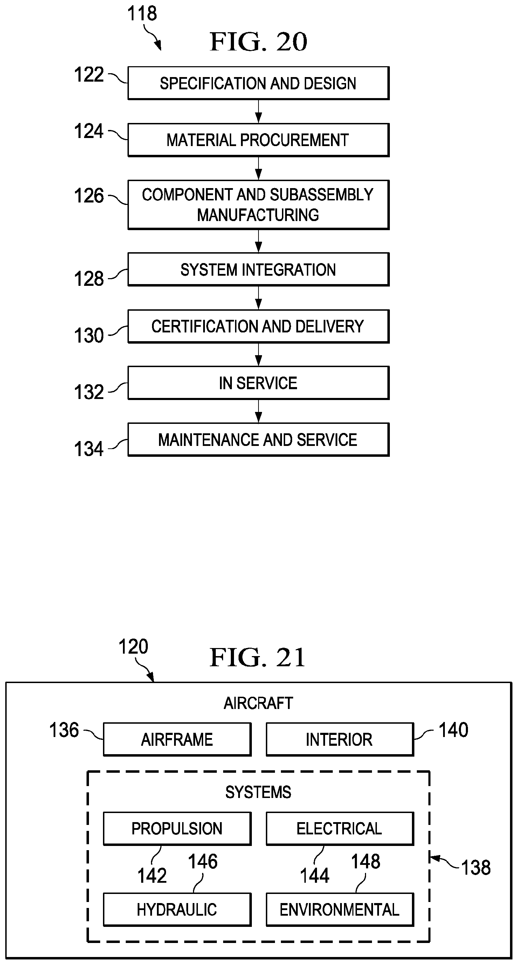

Embodiments of the disclosure may find use in a variety of potential applications, particularly in the transportation industry, including for example, aerospace, marine, automotive applications and other application where composite laminates having controlled hole patterns may be used. Thus, referring now to Figures 20 and 21, embodiments of the disclosure may be used in the context of an aircraft manufacturing and service method 118 as shown in Figure 20 and an aircraft 120 as shown in Figure 21. Aircraft applications of the disclosed embodiments may include, for example, without limitation, acoustical panels to attenuate sound, or to alter air flow over airfoils. During pre-production, exemplary method 118 may include specification and design 122 of the aircraft 120 and material procurement 124. During production, component and subassembly manufacturing 126 and system integration 128 of the aircraft 120 takes place. The disclosed embodiments may be employed during component and subassembly manufacturing of parts having controlled hole patterns. Thereafter, the aircraft 120 may go through certification and delivery 130 in order to be placed in service 132. While in service by a customer, the aircraft 120 is scheduled for routine maintenance and service 134, which may also include modification, reconfiguration, refurbishment, and so on. During maintenance and service 134, replacement components or subassemblies may be installed on the aircraft 122 which may include hole patterns formed by the disclosed method.

Each of the processes of method 118 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in Figure 21, the aircraft 120 produced by exemplary method 118 may include an airframe 136 with a plurality of systems 138 and an interior 140. Examples of high-level systems 138 include one or more of a propulsion system 142, an electrical system 144, a hydraulic system 146 and an environmental system 148. Any number of other systems may be included. The disclosed method may be employed to produce components and subassemblies forming part of the airframe 136 and/or propulsion system 142. For example, the disclosed method may be used to produce acoustic panels having controlled hole patterns that reduce noise generated by engines forming part of the propulsion system 142. Similarly, the disclosed method may be used to produce panels or skins having controlled hole patterns that form part of the airframe 136, or which are used in the interior 140 to reduce noise. Although an aerospace example is shown, the principles of the disclosure may be applied to other industries, such as the marine and automotive industries.

Systems and methods embodied herein may be employed during any one or more of the stages of the production and service method 118. For example, components or subassemblies corresponding to production process 126 may be fabricated or manufactured in a manner similar to components or subassemblies produced while the aircraft 120 is in service. Also, one or more apparatus embodiments, method embodiments, or a combination thereof may be utilized during the production stages 126 and 128, for example, by substantially expediting assembly of or reducing the cost of an aircraft 120. Similarly, one or more of apparatus embodiments, method embodiments, or a combination thereof may be utilized while the aircraft 120 is in service, for example and without limitation, to maintenance and service 134.

As used herein, the phrase "at least one of', when used with a list of items, means different combinations of one or more of the listed items may be used and only one of each item in the list may be needed. For example, "at least one of item A, item B, and item C" may include, without limitation, item A, item A and item B, or item B. This example also may include item A, item B, and item C or item B and item C. The item may be a particular object, thing, or a category. In other words, at least one of means any combination items and number of items may be used from the list but not all of the items in the list are required.

## Claims

1. A method of producing a composite laminate layup having pattern of holes therein, comprising:
forming a layup by laying up multiple plies of unidirectional pre-preg fiber, each of the plies being laid up by laying down bandwidths of pre-preg fiber tows;
spacing the tows in each of the bandwidths apart from each other to form gaps between the tows as the bandwidths are being laid down;
controlling locations of the tows as the bandwidths are being laid down;
controlling the gaps between the tows as the bandwidths are being laid down;
varying fiber orientations of the plies to form a pattern of holes in the layup; and
curing the layup and selecting a resin that is a thermally curable thermoset material and that has a viscosity which provides the resin with flow characteristics that prevent the resin from filling in the holes during thermal curing.

2. The method of claim 1, wherein each of the plies is laid up using a numerically controlled automatic fiber placement machine comprising a computer or programmable logic controller operated by one or more numeric control programs.

3. The method of claim 1, wherein spacing the tows includes varying the gaps between the tows.

4. The method of claim 1, further comprising varying a width of the tows.

5. The method of claim 1, further comprising:
embedding at least one of a woven and a non-woven material within the plies of the layup.

6. The method of claim 1, further comprising:
selecting hole locations, hole sizes and hole shapes; and
programming an automatic fiber placement machine comprising a computer or programmable logic controller operated by one or more numeric control programs to automatically lay up the plies and vary the fiber orientations of the plies to form the pattern of holes having the selected hole size and shape.

7. A composite laminate having a pattern of holes therein, comprising:
a plurality of spaced-apart fiber tows having varying fiber orientations arranged to form a pattern of holes in the laminate; and
a resin matrix in which the fiber tows are embedded, wherein the resin matrix is a thermally curable thermoset material and has a viscosity which provides the resin with flow characteristics that prevent the resin from filling in the holes during thermal curing.

8. The composite laminate of claim 7, wherein fiber tows are arranged in a plurality of plies having differing fiber orientations.

9. The composite laminate of claim 7, wherein the fiber tows have varying widths.

10. The composite laminate of claim 7, wherein the holes each have a polygonal shape.

## Patentansprüche

1. Verfahren zur Herstellung eines Verbundlaminat-Lagenaufbaus mit einer Struktur von Löchern darin, umfassend:
Bilden eines Lagenaufbaus durch Auflegen mehrerer Lagen von unidirektionaler Prepregfaser, wobei jede der Lagen durch Ablegen von Bandbreiten von Prepreg-Fasersträngen aufgelegt wird;
Beabstanden der Stränge in jeder der Bandbreiten voneinander, um Lücken zwischen den Strängen zu bilden, während die Bandbreiten abgelegt werden;
Steuern von Positionen der Stränge, während die Bandbreiten abgelegt werden;
Steuern der Lücken zwischen den Strängen, während die Bandbreiten abgelegt werden;
Variieren von Faserorientierungen der Lagen, um eine Struktur von Löchern in dem Lagenaufbau zu bilden; und
Härten des Lagenaufbaus und Auswählen eines Harzes, das ein wärmehärtbares Duroplastmaterial ist und das eine Viskosität aufweist, die dem Harz Fließeigenschaften verleiht, die verhindern, dass das Harz während des Wärmehärtens die Löcher füllt.

2. Verfahren gemäß Anspruch 1, wobei jede der Lagen unter Verwendung einer numerisch gesteuerten automatischen Faserplatziermaschine, die einen Computer oder einen programmierbaren Logikcontroller umfasst, der von einem oder mehreren numerischen Steuerprogrammen betrieben wird, gelegt wird.

3. Verfahren gemäß Anspruch 1, wobei Beabstanden der Stränge Variieren der Lücken zwischen den Strängen einschließt.

4. Verfahren gemäß Anspruch 1, ferner umfassend Variieren einer Breite der Stränge.

5. Verfahren gemäß Anspruch 1, ferner umfassend:
Einbetten wenigstens eines gewebten und eines nichtgewebten Materials in die Lagen des Lagenaufbaus.

6. Verfahren gemäß Anspruch 1, ferner umfassend:
Auswählen von Lochpositionen, Lochgrößen und Lochformen; und
Programmieren einer automatischen Faserplatziermaschine, die einen Computer oder einen programmierbaren Logikcontroller umfasst, der von einem oder mehreren numerischen Steuerprogrammen betrieben wird, die Lagen automatisch aufzulegen und die Faserorientierungen der Lagen zu variieren, um die Struktur von Löchern mit der ausgewählten Lochgröße und -form zu bilden.

7. Verbundlaminat mit einer Struktur von Löchern darin, umfassend:
eine Vielzahl von beabstandeten Fasersträngen mit variierenden Faserorientierungen, angeordnet, um eine Struktur von Löchern in dem Laminat zu bilden; und
eine Harzmatrix, in der die Faserstränge eingebettet sind, wobei die Harzmatrix ein wärmehärtbares Duroplastmaterial ist und eine Viskosität aufweist, die dem Harz Fließeigenschaften verleiht, die verhindern, dass das Harz während des Wärmehärtens die Löcher füllt.

8. Verbundlaminat gemäß Anspruch 7, wobei Faserstränge in einer Vielzahl von Lagen mit unterschiedlichen Faserorientierungen angeordnet sind.

9. Verbundlaminat gemäß Anspruch 7, wobei die Faserstränge variierende Breiten aufweisen.

10. Verbundlaminat gemäß Anspruch 7, wobei die Löcher jeweils eine polygonale Form aufweisen.

## Revendications

1. Procédé de production d'un empilement stratifié composite renfermant un motif de trous, comprenant :
la formation d'un empilement par empilage de multiples nappes de fibre unidirectionnelle préimprégnée, chacune des nappes étant empilée par pose de largeurs de bande d'étoupes de fibre préimprégnée ;
l'espacement des étoupes dans chacune des largeurs de bande les unes des autres pour former des espaces entre les étoupes lorsque les largeurs de bande sont posées ;
le contrôle des emplacements des étoupes lorsque les largeurs de bande sont posées ;
le contrôle des espaces entre les étoupes lorsque les largeurs de bande sont posées ;
la variation des orientations de fibre des nappes pour former un motif de trous dans l'empilement ; et
le durcissement de l'empilement et la sélection d'une résine qui est un matériau thermodurcissable thermodurci et qui a une viscosité qui fournit à la résine des caractéristiques d'écoulement qui empêchent la résine de remplir les trous pendant un durcissement thermique.

2. Procédé selon la revendication 1, dans lequel chacune des nappes est empilée au moyen d'une machine de mise en place automatique de fibre à commande numérique comprenant un ordinateur ou un contrôleur logique programmable piloté par un ou plusieurs programmes de commande numérique.

3. Procédé selon la revendication 1, dans lequel l'espacement des étoupes comporte la variation des espaces entre les étoupes.

4. Procédé selon la revendication 1, comprenant en outre la variation d'une largeur des étoupes.

5. Procédé selon la revendication 1, comprenant en outre :
l'incorporation d'un matériau tissé et/ou non tissé à l'intérieur des nappes de l'empilement.

6. Procédé selon la revendication 1, comprenant en outre :
la sélection d'emplacements de trous, de tailles de trous et de formes de trous ; et
la programmation d'une machine de mise en place automatique de fibre comprenant un ordinateur ou un contrôleur logique programmable piloté par un ou plusieurs programmes de commande numérique pour empiler automatiquement les nappes et faire varier les orientations de fibre des nappes pour former le motif de trous ayant la taille et la forme de trous sélectionnées.

7. Stratifié composite renfermant un motif de trous, comprenant :
une pluralité d'étoupes de fibre espacées ayant des orientations de fibre variables agencées pour former un motif de trous dans le stratifié ; et
une matrice de résine dans laquelle sont incorporées les étoupes de fibre, la matrice de résine étant un matériau thermodurcissable thermodurci et ayant une viscosité qui fournit à la résine des caractéristiques d'écoulement qui empêchent la résine de remplir les trous pendant un durcissement thermique.

8. Stratifié composite selon la revendication 7, dans lequel les étoupes de fibre sont agencées en une pluralité de nappes ayant des orientations de fibre différentes.

9. Stratifié composite selon la revendication 7, dans lequel les étoupes de fibre ont des largeurs variables.

10. Stratifié composite selon la revendication 7, dans lequel les trous ont chacun une forme polygonale.
